# EUROPEAN PATENT SPECIFICATION

(11) **EP 3 299 413 B1**
(45) Date of publication and mention of the grant of the patent: **17.06.2020**
(21) Application number: 17172741.5
(22) Date of filing: 24.05.2017
(51) Int. Cl.: C08L 21/00, C08L 9/00, B60C 1/00, C08K 5/548, C08L 9/06, C08K 3/04, C08K 3/36, C08L 93/00

(54) **RUBBER COMPOSITION FOR A TIRE TREAD**
KAUTSCHUKZUSAMMENSETZUNG FÜR EINE REIFENLAUFFLÄCHE
COMPOSITION DE CAOUTCHOUC POUR UNE CHAPE DE PNEU

(30) Priority: 22.09.2016 KR 20160121275
(43) Date of publication of application: 28.03.2018
(73) Proprietor: Kumho Tire Co., Inc., Gwangju 62392 (KR)
(72) Inventor: MAENG, Jin Oh, Gyeonggi-do 17067 (KR); MIN, Ho, Gyeonggi-do 17064 (KR)
(74) Representative: Schweitzer, Klaus

(56) References cited:
- EP-A1- 2 103 650
- EP-A1- 2 799 480
- EP-A1- 2 944 669
- EP-A1- 2 960 287
- EP-A1- 2 960 288
- EP-A1- 2 960 289
- EP-A1- 2 974 884
- WO-A1-2015/104955
- WO-A1-2015/190346
- US-A1- 2011 184 084
- US-A1- 2015 329 696

## Description

This application claims priority to Korean Patent Application No. 10-2016-0121275, filed on September 22, 2016 in the Korean Intellectual Property Office.

### [BACKGROUND OF THE INVENTION]

### 1. Field of the Invention

The present invention relates to a rubber composition for a tire, and more particularly, to a rubber composition for a tire tread, which comprises 6 to 20 parts by weight ('wt. part') of a silane coupling agent having a thioester group and a SiO bond; and 1 to 20 wt. parts of terpene resin having a softening point (determined acc. to ASTM 6090-12) of 130 °C or more and a weight average molecular weight of 1,000 or more, to 100 wt. parts of raw rubber.

### 2. Description of the Related Art

A tire should maintain stable running ability, braking performance and low fuel consumption (that is, high fuel efficiency) in various environments such as ice roads, wet surfaces, snow surfaces, etc. In order to satisfy tire labeling regulations in all countries of the world, it is necessary to maintain at least a predetermined level in terms of wet grip and rolling resistance (RR) performances. In particular, with regard to overcoming trade-off of individual performances, there are some technical problems, for example, such that the wet grip performance is proportional to a glass transition temperature Tg, whereas snow grip performance is inversely proportional to the Tg. In order to overcome the above problems, an approach to the development of a novel compounding has been required.

Briefly, the tire should maintain stable running ability and braking performance under diverse environments, that is, ice roads, wet surfaces, snow surfaces, and the like, and in order to satisfy different tire labeling regulations in all countries of the world, maintaining and promoting the wet grip and RR performances to at least a predetermined level for sale have been required.

For example, Korean Patent Laid-Open Publication No. 10-2015-0132607 discloses a rubber composition which comprises 50 to 80 wt. parts of an inorganic filler containing silica and carbon black and further 1 to 20 wt. parts of an aromatic modified terpene resin having a softening point of 100 °C or more, to 100 wt. parts of diene rubber, wherein the diene rubber comprises 50 to 80% by weight ('wt.%) of end modified styrene-butadiene rubber and wherein the modified styrene-butadiene rubber has 40 wt.% or more of vinyl units and 20 to 50 wt.% of butadiene units.

However, the rubber composition for a tire according to the above patent publication No. 10-2015-0132607 involves a problem of not attaining snow performance although rolling-resistant ability, wet grip performance and abrasion-resistance are improved.

Further, Korean Patent Laid-Open Publication No. 10-2015-0052144 discloses a rubber composition for a tire tread, which may improve rolling-resistant ability and wet grip performance to known levels or more while maintaining and enhancing extrusion processibility, and is characterized in that: the rubber composition comprises 60 to 130 wt. parts of silica to 100 wt. parts of diene rubber wherein the diene rubber comprises at least 50 wt.% of hydroxyl group-containing modified styrene-butadiene rubber; a weight ratio of oil to a silica-containing filler of 0.25 or less; a silane coupling agent having a mercapto group and Si-O bond is comprised in an amount of 4 to 15 wt.% to a total amount of silica; and diethyleneglycol is mixed in an amount of 1 to 6 wt.% to the total amount of silica.

However, the rubber composition for a tire tread according to the above patent publication No. 10-2015-0052144 involves problems of not securing desired snow performance and abrasion resistance although rolling-resistant ability and wet grip performance are improved.

WO 2015/104955 A1 relates to a pneumatic tire including a tread formed from a rubber composition for tires comprising a rubber component; an inorganic reinforcing agent, having an average particle size of 1.5 µm or less and a nitrogen adsorption specific surface area of 3 to 120 m²/g; wet silica; and at least one of a coumarone-indene resin having a softening point of -20°C to 45°C or a terpene-based resin having a softening point of 100°C to 170°C, the rubber composition comprising the inorganic reinforcing agent in an amount of 1 to 60 parts by mass per 100 parts by mass of the rubber component, kM₁·xSiO_{y}·zH₂O wherein M₁ represents at least one metal selected from the group consisting of Al, Mg, Ti, Ca, and Zr, or an oxide or hydroxide of the metal; k represents an integer of 1 to 5; x represents an integer of 0 to 10; y represents an integer of 2 to 5; and z represents an integer of 0 to 10.

WO 2015/190346 A1 discloses a rubber composition comprising: a diene rubber, a silica, a silane coupling agent having a mercapto group, a plasticizer, and at least one selected from the group consisting of an oil and a resin; wherein, an amount of the silane coupling agent having a mercapto group is from 2 to 20 mass% relative to the amount of the silica; and a total amount of the plasticizer and the at least one selected from the group consisting of the oil and the resin is 60 parts by mass or greater per 100 parts by mass of the diene rubber.

EP 2 960 288 A1 concerns a rubber composition for a tire tread containing a diene rubber component containing at least 20 mass% of a modified conjugated diene rubber, a silica, and a silane coupling agent; the modified conjugated diene rubber having at least one modified part and at least one conjugated diene rubber part; the conjugated diene rubber part having a conjugated diene copolymer block and an isoprene block containing from 70 mass% to 100 mass% of isoprene units in each conjugated diene rubber part; the modified part bonding to an end of the conjugated diene rubber part; the modified part having a functional group which interacts with the silica; the silane coupling agent being a polysiloxane represented by the following formula (1); a content of the silica being from 60 to 200 parts by mass per 100 parts by mass of the diene rubber component; and a content of the silcane coupling agent being from 1.0 to 20 mass% of the content of the silica (A)ₐ(B)_{b}(C)_{c}(D)_{d}(R¹)ₑSiO_{(4-2a-b-c-d-e)/2} (1).

EP 2 960 289 A1 discloses a rubber composition for a tire, comprising: silica contained in a quantity from 60 to 200 parts by mass per 100 parts by mass of diene rubber; a polysiloxane as disclosed in EP 2 960 288 A1 as a sulfur-containing silane coupling agent, contained in a quantity from 1 to 20 mass% relative to the content of silica; and a thiuram disulfide vulcanization accelerator, contained in a quantity from 0.05 to 3.0 parts by mass.

EP 2 960 287 A1 concerns a rubber composition for a tire tread comprising: a diene rubber; a silica; a sulfur-containing silane coupling agent; and an alkyl triethoxysilane; a content of the silica being from 60 to 200 parts by mass per 100 parts by mass of the diene rubber, the sulfur-containing silane coupling agent being a polysiloxane as disclosed in EP 2 960 288 A1; a content of the sulfur-containing silane coupling agent being from 1 to 20 mass% relative to the content of the silica, and a content of the alkyl triethoxysilane being from 0.2 to 20 mass% of the content of the silica.

EP 2 944 669 A1 and US 2015/329696 A1 disclose a rubber composition, comprising: a rubber component containing an oil-extended butadiene rubber having a cis content of 95 mol% or greater, a vinyl content of 1.2 mol% or less and a weight-average molecular weight of 530,000 or greater, and/or a styrene-butadiene rubber having a bound styrene content of 10-60 mass% and a weight-average molecular weight of 800,000 or greater; an inorganic reinforcement agent of the formula mM·xSiO_{y}·zH₂O and having a nitrogen adsorption specific surface area of 10-60 m²/g or greater; and silica having a nitrogen adsorption specific surface area of 100 m²/g or greater and/or carbon black having a nitrogen adsorption specific surface area of 100 m²/g or greater, wherein the oil-extended butadiene rubber is synthesized using a rare-earth element-based catalyst, the total content of the oil butadiene rubber and the styrene-butadiene rubber is 10-100 mass% of the rubber component, based on 100 parts by mass of the rubber component, the content of the inorganic reinforcement agent is 1-70 parts by mass, and the total content of the silica and carbon black is at least 50 parts by mass.

EP 2 799 480 A1 discloses a rubber composition for a tire, wherein a content of an isoprene-based rubber in 100% by mass of a rubber component ranges from 10% by mass to 100% by mass, a content of a butadiene rubber in 100% by mass of the rubber component ranges from 0% by mass to 80% by mass, a content of a styrene butadiene rubber in 100% by mass of the rubber component ranges from 0% by mass to 70% by mass, and a content of a terpene-based resin having a hydroxyl value that is less than or equal to 20 and a softening point ranging from 106°C to 124°C ranges from 1 part by mass to 50 parts by mass, per 100 parts by mass of the rubber component.

EP 2 974 884 A1 relates to a rubber composition for a tire, wherein, in 100% by mass of a rubber component, a content of isoprene-based rubber is in a range of 10% by mass to 100% by mass, a content of butadiene rubber is in a range of 0% by mass to 80% by mass, and a content of styrene butadiene rubber is in a range of 0% by mass to 70% by mass, and, in relation to 100 parts by mass of the rubber component, a content of an oil-extended terpene-based resin having a hydroxyl value of 20 or less and a softening point in a range of 10°C to 50°C is in a range of 1 part by mass to 50 parts by mass.

EP 2 103 650 A1 discloses a rubber composition formed by compounding an indene-containing C9-based resin having a softening point of 130°C-190°C and an indene content of 30-80 mass% into a rubber component.

US 2011/184084 A1 concerns a rubber composition for tires which comprises at least one rubber component selected from natural rubber and synthetic rubbers and, based on 100 parts by mass of the rubber component, 0.1 to 45 parts by mass of (A) a terpene phenol resin and 1 to 150 parts by mass of (B) a softener comprising a process oil which comprises polycyclic aromatic compounds (PCA) in an amount such that a content of extracts with dimethyl sulfoxide (DMSO) in accordance with a method of IP346 is controlled to a value smaller than 3%.

### [SUMMARY OF THE INVENTION]

In consideration of the above-described problems in the prior art, it is an object of the present invention to provide a rubber composition for a tire tread, which is capable of improving rolling-resistant ability, wet grip performance, abrasion resistance, snow grip and ice grip performances, simultaneously.

In order to accomplish the above object, there is provided a rubber composition as defined in claim 1.

In addition, according to another aspect of the present invention, there is provided a tire comprising the above rubber composition.

The rubber composition for a tire tread of the present invention comprises a silane coupling agent having a thioester group and SiO bond in order to improve trade-off performances, that is, wet grip performance and snow grip performance, thus to improve processibility, especially mixing processibility, abrasion resistance, RR performance and wet grip performance. Additionally, the rubber composition for a tire tread of the present invention comprises a terpene resin having a softening point (determined acc. to ASTM 6090-12) of 130 °C or more and a molecular weight of 1,000 or more, in order to improve the wet grip performance and snow grip performance while maintaining the enhanced abrasion resistance and RR performance.

### [DETAILED DESCRIPTION OF THE INVENTION]

The present invention provides a rubber composition for a tire tread, which comprises: 6 to 20 wt. parts of a silane coupling agent having a thioester group and SiO bond; and 1 to 20 wt. parts of terpene resin having a softening point (determined acc. to ASTM 6090-12) of 130 °C or more and a weight average molecular weight of 1,000 or more, to 100 wt. parts of raw rubber.

In the rubber composition for a tire of the present invention, the silane coupling agent having a thioester group and SiO bond may comprise 3-(octanoylthio)propyl triethoxysilane represented by Formula 1 below:

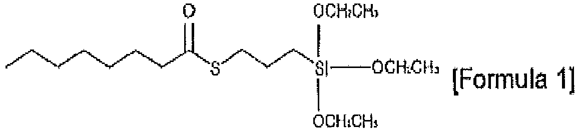

In the rubber composition for a tire of the present invention, the terpene resin preferably has a softening point (determined acc. to ASTM 6090-12) of 130 to 180 C°, and a weight average molecular weight of 1,000 to 2,000.

If the silane coupling agent is comprised in an amount of less than 6 wt. parts to 100 wt. parts of the raw rubber, the tensile strength is reduced and causes a problem in processibility. If the silane coupling agent is comprised in an amount of exceeding 20 wt. parts, tension properties are reduced and a problem entailed in extrusion processibility may occur.

If the terpene resin is comprised in an amount of less than 1 wt. part to 100 wt. parts of the raw rubber, the desired purpose of improving the wet grip which goes along with the addition of the terpene resin may not be achieved since the content of the terpene resin is too small. On the other hand, if the terpene resin is comprised in an amount of exceeding 20 wt. parts, problems entailed in the uniformity of the tire building during the manufacturing process may occur.

In the rubber composition for a tire of the present invention, the raw rubber may be natural rubber, synthetic rubber or a mixture thereof.

In the rubber composition for a tire of the present invention, the types of the synthetic rubber are not particularly limited and may comprise, for example, styrene-butadiene rubber, butadiene rubber, butyl rubber, emulsion-polymerized styrene-butadiene rubber (E-SBR), solution-polymerized styrene-butadiene rubber (S-SBR), epichlorohydrin rubber, nitrile rubber, hydrogenated nitrile rubber, brominated polyisobutyl isoprene-co-paramethyl styrene (BIMS) rubber, urethane rubber, fluorine rubber, silicone rubber, styrene ethylene butadiene styrene copolymer rubber, ethylene propylene rubber, ethylene propylene diene monomer rubber, Hypalon rubber, chloroprene rubber, ethylene vinyl acetate rubber, acryl rubber, and the like.

In the rubber composition for a tire of the present invention, the raw rubber is a diene rubber comprising:
- 10 to 30 wt.% - of end modified styrene-butadiene rubber wherein
   ∘ the styrene unit content is 20 wt.% or less, and preferably, 15 to 20 wt.%, and
   ∘ the vinyl unit content is 30 wt.% or less, and preferably, 25 to 30 wt.%.;
- 30 to 50 wt.% - of styrene-butadiene rubber; and
- 20 to 60 wt.% - of butadiene rubber or natural rubber.

In the rubber composition for a tire of the present invention, the end modified styrene-butadiene rubber may be a Sn end modified styrene-butadiene rubber (SSBR). Moreover, the end modified styrene-butadiene rubber preferably exhibits a low Tg (low Tg SSBR).

The styrene-butadiene rubber has reactive bi-end functional groups which can be bound to Sn (= Sn end modified). Such a Sn end modified styrene-butadiene rubber exhibits affinity properties to both silica and carbon, thereby improving the abrasion resistance of the rubber, compared to non end modified SBR.

The glass transition temperature Tg (determined by DSC at 10°K/min) in the low Tg Sn modified SBR is as low as -70 to -50 °C, preferably -65 to -55 °C. The Tg of Sn modified SBR is controlled by the content of micro-structure (Styrene, Vinyl), which in turn is closely related to the braking performance. The higher the content of micro-structure (Styrene, Vinyl), the better the braking performance. This means that the snow/wear performance can be improved with a lowering of the Tg. However, when the Tg is below -70 °C, the micro-structure (Styrene, Vinyl) content is too low and the braking performance is poor. If the Tg is above -50 °C, the characteristics of the modified SBR are not sufficiently different from the normal Tg SBR and, accordingly, the snow/wear performance becomes poor. The preferred low Tg SSBR has the above defined micro-structure (styrene: 20 wt.% or less, vinyl: 30 wt. % or less) which results in an improved snow grip performance. This means that wet grip and dry grip performances may be enhanced while at the same time the abrasion resistance and the snow grip is maintained at a good level.

The rubber composition for a tire of the present invention may further comprise carbon black and silica.

In the rubber composition for a tire of the present invention, it is preferred that the carbon black is used as particles having a specific surface area (BET according to DIN-ISO 9277) of 140 m²/g or less to improve dispersion of the carbon black in the rubber and abrasion (wear performance) of the tire.

In the rubber composition for a tire of the present invention, the silica may be used in a form having a nitrogen adsorption specific surface area (BET according to DIN-ISO 9277) of 90 to 230 m²/g.

In the rubber composition for a tire of the present invention, the silica may be comprised in an amounts of exceeding 60 wt. parts but less than 120 wt. parts, and preferably, 70 to 110 wt. parts to 100 wt. parts of the raw rubber.

If the silica is comprised in an amount of 60 wt. parts or less to 100 wt. parts of the raw rubber, wet grip performance is deteriorated. If the silica is comprised in an amount of 120 wt. parts or more, there are problems of considerably reducing mixing processibility, abrasion resistance, and low fuel consumption.

The rubber composition for a tire of the present invention may further comprise a vulcanizing agent. The vulcanizing agent used herein may comprise organic peroxide or sulfur vulcanizing agents.

The organic peroxide may comprise, for example, benzoyl peroxide, dicumyl peroxide, di-t-butyl peroxide, t-butylcumyl peroxide, methylethylketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3 or 1,3-bis(t-butylperoxypropyl)benzene, di-t-butylperoxydiisopropylbenzene, t-butylperoxy-benzene, 2,4-dichlorobenzoyl peroxide, 1,1-di-t-butylperoxy-3,3,5-tri-methylsiloxane, n-butyl-4,4-di-t-butylperoxy valerate, and the like.

Among these, dicumyl peroxide, t-butyl peroxybenzene and di-t-butylperoxydiisopropylbenzene are preferably used.

As a sulfur vulcanizing agent for example sulfur, morpholine disulfide, etc. may be used herein.

Among these, sulfur is preferably used.

The vulcanizing agent may be used alone or in combination of two or more thereof.

The rubber composition for a tire of the present invention may further comprise typical additives for a rubber composition, for example, zinc oxide, stearic acid, an anti-ageing agent, an adhesive, or the like. The content of these additives - if present - may be adjusted depending upon the desired physical properties.

The method for manufacturing the rubber composition for a tire of the present invention may comprise, mixing the above raw rubber, carbon black, silica, processing oil, such as TDAE/paraffin oil, etc., and an additive such as a silane coupling agent together in a Banbury mixer at a temperature of 80 to 150 C° by any conventional method; then, vulcanizing the mixture at 155 to 165 C° for 10 to 20 minutes. The manufacturing method needs not be described in detail since the skilled person is familiar with this process.

Further, the present invention provides a tire comprising the above rubber composition.

The tire of the present invention may be a tire comprising the rubber composition in the tread part.

The tire of the present invention may be manufactured using the above rubber composition for a tire. More particularly, the inventive tire may be manufactured by any conventional method without particular limitation thereof, so long as the tire manufacturing method is commonly known in the art and the rubber composition described above is used.

The present invention will now be described in more detail with reference to the following examples. These examples are proposed for illustrative purpose only.

### EXAMPLES 1 TO 4 AND COMPARATIVE EXAMPLES 1 TO 11

Preparation of rubber specimen and measurement of physical properties thereof.

After adding components with constitutional compositions and contents listed in Table 2 below (unit: parts by weight) to a Banbury mixer, these components were mixed at 140 C°, thereby preparing a mixture.

Then, sulfur was added to the mixture as a vulcanizing agent, followed by vulcanization at 160 C° for 15 minutes, thereby obtaining a rubber specimen.

Table 1 shows the predictive factors and the measurement methods for predicting the processibility (viscosity), handling performance, snow grip performance, wet grip performance, RR performance, and abrasion resistance according to the property of the rubber. The results thereof are shown in Table 2 below.

In Table 2 below, numerical values of the handling performance, snow grip and wet grip performances, RR performance, abrasion resistance and processibility are represented by relative indexes to 100 as a standard value defined by Comparative Example 1.

**Table 1**

| **Classification** | **Test Method/Comments** |
|---|---|
| Tensile strength (Kg/m³) | ASTM D412, tensile testing machine |
| Handling performance (Hardness) | ASTM D2240-05, hardness taster (Shore A) |
| | [Comment]:The glass hardness is expressed (In terms of a reference index of 100 set for C.-Ex. 1) The higher the value, the better the handling performance. |
| Snow grip performance (tanδ@-20 C°) | ASTM D4065, ASTM4473, viscoelasticity tester |
| | [Comment]:Readlng tanδ-20C° by substitutional characteristic Index. The better the actual data, the better the hysteresis and snow grip performance. |
| Wet grip performance (tanδ@0 C°) | ASTM D4065, ASTM4473, viscoelasticity tester |
| | [Comment]:Reading Tanδ 0C° value by substitutional characteristic Index. The higher the actual data, the better the hysteresis and the better the wet grip performance. |
| RR performance (tanδ@60 C°) | ASTM D4065, ASTM4473, viscoelasticity tester |
| | [Comment]:Reading Tanδ 60 C° value by substitutional characteristic index. The lower the actual data, the lower the energy loss and the better the RR performance. |
| Abrasion resistance (DIN loss of weight (gr]) | DIN 53516, DIN abrasion test |
| | [Comment]:The smaller the loss in weight in grams, the better the abrasion resistance. |
| Processibility (Viscosity) | ASTM D1646, Viscometer tester |
| | [Comment]: The viscosity of the blended unvulcanized rubber was measured. The processibility is evaluated for the purpose of setting compounding rubber formulation and working conditions. The lower the actual data, the better the processibility. |

**[Table 2]**

| Item | C.-Ex. 1 | C.-Ex. 2 | C.-Ex. 3 | C.-Ex. 4 | C.-Ex. 5 | C.-Ex. 6 | C.-Ex. 7 | C.-Ex. 8 | C.-Ex. 9 | C.-Ex. 10 | C.-Ex. 11 | Ex. 1 | Ex. 2 | Ex. 3 | Ex. 4 |
|---|---|---|---|---|---|---|---|---|---|---|---|---|---|---|---|
| Low Tg Sn modified SBR1 | | 5 | 40 | 20 | 20 | 20 | 20 | 20 | 20 | 20 | 20 | 10 | 20 | 30 | 30 |
| SBR1 | 60 | 55 | 20 | 65 | 15 | 40 | 40 | 40 | 40 | 40 | 40 | 30 | 40 | 40 | 30 |
| BR | 40 | 40 | 40 | 15 | 65 | 40 | 40 | 40 | 40 | 40 | 40 | 60 | 40 | 30 | |
| NR | | | | | | | | | | | | | | | 40 |
| Silica | 85 | 85 | 85 | 85 | 85 | 60 | 120 | 85 | 85 | 85 | 85 | 85 | 85 | 85 | 85 |
| Carbon black | 5 | 5 | 5 | 5 | 5 | 5 | 5 | 5 | 5 | 5 | 5 | 5 | 5 | 5 | 5 |
| Silane coupling agent 1 | 4 | 4 | 4 | 4 | 4 | 4 | 4 | | | | | | | | |
| Silane coupling agent 2 | | | | | | | | 5 | 25 | 10 | 10 | 20 | 6 | 10 | 10 |
| Terpene resin | | | | | | | | | | 0 | 30 | 20 | 10 | 10 | 10 |
| Tensile strength (Kg/m³) | 170 | 174 | 164 | 189 | 158 | 171 | 184 | 154 | 185 | 180 | 180 | 175 | 170 | 185 | 192 |
| Handling performance (Hardness) | 100 | 100 | 106 | 110 | 100 | 95 | 116 | 102 | 95 | 100 | 100 | 103 ^{.} | 103 | 102 | 100 |
| Snow grip performance (tanδ-20 C°) | 100 | 100 | 122 | 80 | 118 | 98 | 98 | 102 | 102 | 105 | 96 | 102 | 104 | 105 | 104 |
| Wet grip performance (tanδ0 C°) | 100 | 99 | 85 | 118 | 84 | 88 | 113 | 100 | 114 | 100 | 117 | 113 | 115 | 117 | 110 |
| RR performance (tanδ60 C°) | 100 | 102 | 109 | 88 | 94 | 109 | 83 | 94 | 118 | 115 | 79 | 107 | 112 | 115 | 114 |
| Abrasion resistance (DIN loss of weight) | 100 | 101 | 118 | 82 | 123 | 105 | 86 | 96 | 105 | 105 | 98 | 105 | 105 | 110 | 107 |
| Processibility (Viscosity) | 100 | 100 | 103 | 99 | 105 | 133 | 40 | 99 | 125 | 114 | 121 | 114 | 118 | 118 | 121 |

Table 2 above shows that with the low Tg Sn modified SBR1 wet grip and dry grip performances are enhanced while abrasion resistance and snow grip performance is maintained at a good level.

The styrene-butadiene rubber (SBR1) used herein was S-SBR manufactured by KKPC Co., the butadiene rubber (BR) used herein was KBR01 manufactured by KKPC Co., and the natural rubber (NR) used herein was STR20 manufactured by Von Bundit Co., Ltd..

The silica used herein had a nitrogen adsorption specific surface area of 200±5 m²/g as a BET (according to DIN-ISO 9277) measurement value, while the carbon black used herein was ASTM Grade 300.

The silane coupling agent 1 used herein was bis-(triethoxysilyl-propyl)-tetrasulfide (Si-69), while the silane coupling agent 2 used herein was NXT represented by Formula 1 above, which is manufactured by Momentive Co.

Further, the terpene resin used herein was T160 (softening point (determined acc. to ASTM 6090-12): 160 °C, weight average molecular weight: 1,127) manufactured by Yasuhara Chemical Co., which is a terpene-based natural resin.

Snow grip performance refers to a snow grip performance alternative index, which has a value of tanδ at -20 °C (tanδ@-20 °C) based on DMA standard. The higher this value, the better the snow grip performance.

Further, abrasion resistance was indicated by an index of DIN (Ueshima Seisakusho Co.) value measured by an abrasion test apparatus. The lower this value, the lower the loss in rubber weight, thus to demonstrate excellent performance. Alternatively, wet grip performance was indicated by an index of tanδ@0 °C value. The higher this index, the better the wet grip performance.

The RR performance was indicated by an index of tanδ@60 °C value. The higher this index, the better the RR performance. Further, processibility is improved since the viscosity at 100 °C is decreased, which is demonstrated by the relative indexes to 100 as a standard value defined by Comparative Example 1.

As shown in the results of Table 2 above, it is preferred that the raw rubber used herein contains 10 to 30 wt.% of end modified styrene-butadiene rubber (Low Tg Sn modified SBR). If this end modified styrene-butadiene rubber is contained in an amount of less than 10 wt.%, improvement of snow grip performance is insignificant (see Comparative Example 2). On the other hand, it could be seen that, if the end modified styrene-butadiene rubber is contained in an amount of exceeding 30 wt.%, wet grip performance as a trade-off performance is deteriorated (see Comparative Example 3).

It was demonstrated that, if the butadiene rubber or natural rubber is comprised in an amount of less than 20 wt.%, abrasion resistance and snow grip performance are deteriorated (see Comparative Example 4), while wet grip performance is deteriorated if the above rubber is comprised in an amount of exceeding 60 wt.% (see Comparative Example 5).

Further, it was demonstrated that, if the silica is comprised in an amount of 60 wt. parts or less to 100 wt. parts of the raw rubber, wet grip performance is deteriorated (see Comparative Example 6), while mixing processibility, abrasion resistance and low fuel consumption are considerably reduced if the silica is comprised in an amount of 120 wt. parts or more (see Comparative Example 7).

Further, it was demonstrated that, if the silane coupling agent having a thioester group and SiO bond (silane coupling agent 2) is comprised in an amount of less than 6 wt.% to 100 wt. parts of the raw rubber, the tensile strength is considerably decreased to cause a problem in vulcanization processibility (see Comparative Example 8), while handling performance (hardness) may be reduced if the second (2) silane coupling agent is comprised in an amount of exceeding 20 wt.% (see Comparative Example 9).

Further, it was demonstrated that, if the terpene resin is comprised in an amount of 30 wt. parts or more to 100 wt. parts of the raw rubber, problems in snow grip and RR performances may occur (see Comparative Example 11).

On the other hand, as shown in Examples 1 to 4, inclusion of the end modified styrene-butadiene rubber may improve snow grip performance while maintaining wet grip performance as a trade-off performance. Further, it could be seen that, when the silica is comprised in an amount of exceeding 60 wt. parts but less than 120 wt. parts, wet grip performance may be improved.

Further, when a silane coupling agent having a thioester group and SiO bond (silane coupling agent 2) is added in an amount of 6 to 20 wt. parts to 100 wt. parts of the raw rubber, mixing processibility, abrasion resistance, RR performance and wet grip performance are improved. Further, it could also be seen that, when the terpene resin having a softening point of 130 °C or more and a molecular weight of 1,000 or more is comprised in an amount of 1 to 20 wt. parts, wet grip performance is improved while maintaining abrasion resistance and RR performance.

According to the present invention, in order to improve trade-off performances such as wet grip performance and snow grip performance, there is provided a rubber composition for a tire tread and a tire comprising the same, in which a silane coupling agent having a thioester group and SiO bond is comprised to improve mixing processibility, abrasion resistance, RR performance and wet grip performance; and also, a terpene resin having a softening point of 130 °C or more and a molecular weight of 1,000 or more is comprised to improve wet grip performance and snow grip performance while maintaining abrasion resistance and RR performance. Consequently, the present invention may be usefully applied to a technical field to which the present invention pertains.

## Claims

1. A rubber composition for a tire tread, comprising: 6 to 20 parts by weight of a silane coupling agent having a thioester group and SiO bond; and 1 to 20 parts by weight of terpene resin having a softening point (determined acc. to ASTM 6090-12) of 130 °C or more and a weight average molecular weight of 1,000 or more, to 100 parts by weight of raw rubber,
wherein the raw rubber comprises: 10 to 30% by weight of end modified styrene-butadiene rubber wherein a styrene unit content is 20% by weight or less and a vinyl unit content is 30% by weight or less; 30 to 50% by weight of styrene-butadiene rubber; and 20 to 60% by weight of butadiene rubber or natural rubber,
and wherein the rubber composition comprises a silica in an amount of more than 60 parts by weight and less than 120 parts by weight to 100 parts by weight of raw rubber.

2. The composition according to claim 1, wherein the silane coupling agent is 3-(octanoylthio)propyl triethoxysilane represented by Formula 1 below:

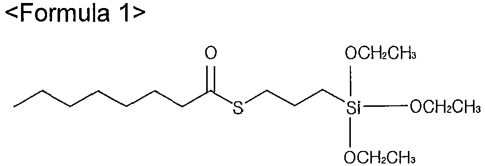

3. The composition according to claim 1 or 2, wherein the raw rubber is natural rubber, synthetic rubber or a mixture thereof.

4. A tire comprising the rubber composition according to any one of claims 1 to 3.

## Patentansprüche

1. Kautschukzusammensetzung für eine Reifenlauffläche, umfassend: 6 bis 20 Gewichtsteile eines Silan-Kupplungsmittels mit einer Thioestergruppe und einer SiO-Bindung und 1 bis 20 Gewichtsteile Terpenharz mit einem Erweichungspunkt (bestimmt gemäß ASTM 6090-12) von 130 °C oder mehr und einem gewichtsmittleren Molekulargewicht von 1000 oder mehr, auf 100 Gewichtsteile Rohkautschuk,
wobei der Rohkautschuk 10 bis 30 Gew.-% endmodifizierten Styrol-Butadien-Kautschuk, wobei der Gehalt an Styrol-Einheiten 20 Gew.-% oder weniger beträgt und der Gehalt an Vinyl-Einheiten 30 Gew.-% oder weniger beträgt; 30 bis 50 Gew.-% Styrol-Butadien-Kautschuk und 20 bis 60 Gew.-% Butadienkautschuk oder Naturkautschuk umfasst,
und wobei die Kautschukzusammensetzung eine Kieselsäure in einer Menge von mehr als 60 Gewichtsteile mit weniger als 120 Gewichtsteile auf 100 Gewichtsteile Rohkautschuk umfasst.

2. Zusammensetzung nach Anspruch 1, wobei es sich bei dem Silan-Kupplungsmittel um 3-(Octanoylthio)tri-ethoxysilan handelt, das durch nachstehende Formel 1 wiedergegeben wird:

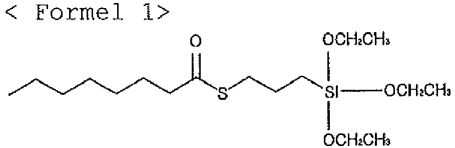

3. Zusammensetzung nach Anspruch 1 oder 2, wobei es sich bei dem Rohkautschuk um Naturkautschuk, Synthesekautschuk oder eine Mischung davon handelt.

4. Reifen, umfassend die Kautschukzusammensetzung nach einem der Ansprüche 1 bis 3.

## Revendications

1. Composition de caoutchouc pour une bande de roulement de pneu, comprenant : 6 à 20 parties en poids d'un agent de couplage à base de silane présentant un groupe thioester et une liaison SiO ; et 1 à 20 parties en poids de résine terpène présentant un point de ramollissement (déterminé selon ASTM 6090-12) de 130 °C ou plus et un poids moléculaire moyen en poids de 1 000 ou plus, à 100 parties en poids de caoutchouc brut,
dans laquelle le caoutchouc brut comprend : 10 à 30 % en poids de caoutchouc styrène-butadiène à extrémité modifiée où une teneur en motifs styrène est de 20 % en poids ou moins et une teneur en motifs vinyle est de 30 % en poids ou moins ; 30 à 50 % en poids de caoutchouc styrène-butadiène ; et 20 à 60 % en poids de caoutchouc butadiène ou de caoutchouc naturel,
et dans laquelle la composition de caoutchouc comprend une silice en une quantité de plus de 60 parties en poids et de moins de 120 parties en poids à 100 parties en poids de caoutchouc brut.

2. Composition selon la revendication 1, dans laquelle l'agent de couplage à base de silane est le 3-(octanoyl)propyltriéthoxysilane représenté par la formule 1 ci-dessous :

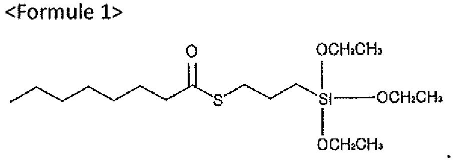

3. Composition selon la revendication 1 ou 2, dans laquelle le caoutchouc brut est du caoutchouc naturel, du caoutchouc synthétique ou un mélange de ceux-ci.

4. Pneu comprenant la composition de caoutchouc selon l'une quelconque des revendications 1 à 3.
